# FASCICULE DE BREVET EUROPEEN

(11) **EP 1 575 755 B1**
(45) Date de publication et mention de la délivrance du brevet: **10.10.2007**
(21) Numéro de dépôt: 03815112.2
(22) Date de dépôt: 10.12.2003
(51) Int. Cl.: B29C 49/68

(54) **FOUR POUR CHAUFFER AU DEFILE DES EBAUCHES DE RECIPIENTS EN MATERIAU THERMOPLASTIQUE**
OFEN ZUM ERWÄRMEN VON SICH BEWEGENDEN BEHÄLTERZUSCHNITTEN AUS THERMOPLASTISCHEM MATERIAL
OVEN FOR HEATING MOVING THERMOPLASTIC MATERIAL CONTAINER BLANKS

(30) Priorité: 12.12.2002 FR 0215715
(43) Date de publication de la demande: 21.09.2005
(73) Titulaire: SIDEL PARTICIPATIONS, 76930 Octeville-sur-Mer (FR)
(72) Inventeur: Evrard, Alain, 76930 Octeville-sur-Mer (FR); Lecomte, Frédéric, 76930 Octeville-sur-mer (FR); Takhedmit, Nasser, 76930 Octeville-sur-mer (FR)
(74) Mandataire: Gorrée, Jean-Michel
(86) Numéro de dépôt international: PCT/FR2003/003661
(87) Numéro de publication internationale: WO 2004/062885

(56) Documents cités:
- DE-A- 19 906 309
- US-A- 3 787 170
- US-A- 3 947 243
- US-A- 4 025 294
- US-A- 5 308 233
- US-B1- 6 428 735

## Description

La présente invention se situe, d'une façon générale, dans le domaine de la fabrication de récipients, tels que bouteilles, flacons, ..., en matériau thermoplastique, tel que le PET ou le PEN, par soufflage ou étirage-soufflage de récipients de départ ou ébauches (préformes, récipients intermédiaires) et, plus spécifiquement, l'invention concerne la phase du chauffage desdites ébauches effectué en préalable à l'étape de soufflage ou d'étirage-soufflage afin de ramollir et rendre déformable le matériau plastique.

De façon plus précise l'invention concerne des perfectionnements apportés aux fours pour chauffer au défilé des ébauches, notamment des préformes ou des récipients intermédiaires, en matériau thermoplastique, tel que mentionné dans le préambule de la revendication 1.

Pour que le processus d'étirage se déroule de façon correcte et régulière sur l'ensemble du corps de l'ébauche, il est nécessaire que la totalité du matériau thermoplastique soit porté à une température suffisante pour être ramolli, sans toutefois que cette température soit excessive pour éviter la cristallisation du matériau. Ceci implique que, malgré la mauvaise conductibilité du matériau thermoplastique, une quantité de chaleur suffisante (engendrée par exemple de façon connue par un rayonnement infrarouge) se propage à travers la totalité de l'épaisseur de la paroi de l'ébauche (chauffage à coeur).

Dans le cas de certains moyens de chauffage tels que des lampes à rayonnement infrarouge, il ne sert à rien de forcer la puissance d'émission du rayonnement infrarouge pour tenter de parvenir plus vite à ce résultat, car la médiocre conductibilité thermique du matériau thermoplastique implique un certain laps de temps pour parvenir à un chauffage à coeur et une réduction de cette durée par une augmentation de la puissance du rayonnement infrarouge risque d'entraîner une cristallisation du matériau superficiel de la face externe de la paroi. Une telle solution doit donc impérativement être écartée.

Une solution au problème doit donc être recherchée dans un allongement du temps d'exposition du matériau thermoplastique aux moyens de chauffage.

Une solution envisageable pourrait consister à ralentir les ébauches défilant devant les moyens de chauffage disposés latéralement. Toutefois, il faut noter que, par ailleurs, les fabricants de récipients cherchent constamment à accroître les cadences de production, ce qui peut être obtenu notamment par une augmentation des vitesses des machines. Une telle aspiration va donc à l'encontre d'un abaissement de la vitesse de déplacement de la chaîne de fabrication en un point quelconque de celle-ci. Cette solution doit donc être écartée, elle aussi.

Certes, on pourrait envisager une réduction de la vitesse de défilement des ébauches dans le four (par exemple réduction de vitesse de moitié), mais en mettant en oeuvre deux fours alimentés en parallèle : la capacité totale de traitement serait alors conservée. Mais cette solution serait trop onéreuse à la fois en matériel et en énergie, et elle doit également être écartée.

Une solution intéressante peut consister à accroître la longueur du four, ce qui, pour une vitesse de défilement donnée des ébauches, conduit à augmenter la durée d'exposition. Il devient alors possible d'envisager une réduction de la puissance d'émission des moyens de chauffage, ce qui est autorisé par le fait qu'on laisse alors le temps nécessaire à la chaleur pour se propager à travers l'épaisseur de la paroi des ébauches. Cette solution entraîne certes un surcoût en matériel pour allonger le four, mais à l'utilisation elle s'avère économique en raison de la réduction (pouvant aller jusqu'à 35 %) de l'énergie nécessaire au traitement thermique des ébauches.

Toutefois, cette solution, bien que globalement intéressante pour les raisons sus-indiquées, présente un inconvénient dû à la grande longueur du four ainsi aménagé, qui s'avère difficile à mettre en oeuvre en pratique.

Le document US 3 787 170 divulgue une installation de chauffage de préformes des éléments de chauffage disposés entre deux brins parallèles d'un transporteur de préformes. Toutefois, chaque élément de chauffage est constitué de panneaux radiants formés chacun de résistances chauffantes montées de part et d'autre d'une plaque de support qui est sensiblement isolante et empêche que la chaleur générée par les résistances chauffantes situées d'un côté de la plaque de support puisse parvenir de l'autre côté à travers la plaque.

Cette installation connue fonctionne donc comme une installation double dans laquelle les résistances chauffantes montées sur les faces respectives de la plaque de support, dos à dos, ne chauffent que le demi-espace vers lequel elles sont tournées.

Une telle installation ne confère nullement aux moyens de chauffage des conditions de fonctionnement optimales.

Le document US 4 025 294 divulgue une installation de chauffage à bandes chauffantes qui est agencée sensiblement comme la précédente et qui présente donc les mêmes inconvénients.

C'est dans ces conditions que l'invention propose une solution perfectionnée permettant de satisfaire au besoin exprimé d'une exposition plus longue des ébauches aux moyens de chauffage tout en évitant les divers inconvénients des solutions exposées plus haut.

A ces fins, l'invention propose un four pour chauffer au défilé des ébauches, notamment des préformes ou des récipients intermédiaires, en matériau thermoplastique, tel que mentionné au préambule de la revendication 1, lequel four étant agencé conformément à l'invention, se caractérise par les dispositions énoncées dans la partie caractérisante de la revendication 1.

De préférence, les deux branches sont, à une de leurs extrémités, réunies par un tronçon de transporteur en boucle qui est situé en dehors de la zone d'action des moyens de chauffage et qui de ce fait constitue une zone de stabilisation thermique des ébauches.

Grâce à cet agencement, chaque ébauche traverse au moins à deux reprises le four, avec une interruption, entre ces deux phases de chauffage, qui correspond au trajet de retournement des moyens transporteurs et qui constitue une étape de stabilisation au cours de laquelle la chaleur continue à diffuser au sein du matériau. La durée du chauffage est ainsi doublée, et amène à un traitement thermique du matériau thermoplastique effectué dans des conditions optimales procurant un chauffage homogène et à coeur de la totalité du matériau plastique.

Sur le plan structurel, le résultat intéressant précité est obtenu avec un seul ensemble de moyens de chauffage dont l'efficacité est doublée par le fait que l'on exploite, ici, leur rayonnement de façon bidirectionnelle, et non plus monodirectionnelle comme dans un four classique.

Certes, on connaît déjà (voir par exemple les documents EP-A-0 868 284 et DE-A-24 27 611) des agencements de four à deux files de passage des objets à traiter de part et d'autre des moyens de chauffage. Toutefois, dans ces agencements connus, les deux files d'objets à chauffer se déplacent dans le même sens. Ces fours connus permettent de doubler la capacité de traitement, mais chaque objet n'effectue qu'un unique parcours à travers le four. De ce fait, le temps d'exposition de chaque objet n'est pas allongé par rapport au temps d'exposition d'un objet traversant un four traditionnel (c'est-à-dire à une seule file d'objets) de même longueur.

Au surplus, on notera que, dans un four à double passage en sens inverses comme préconisé conformément à l'invention, les deux expositions successives de chaque objet aux moyens de chauffage, se traduisant par un accroissement du temps d'exposition, peut s'accompagner avantageusement d'une réduction de la puissance du rayonnement émis par lesdits moyens de chauffage, et donc par une réduction de la puissance électrique consommée, ce qui est tout particulièrement intéressant pour l'utilisateur (des essais ont mis en évidence que l'économie obtenue, avec des lampes à rayonnement infrarouge, atteint, voire dépasse 50 %).

Dans un mode de réalisation intéressant, le four comporte deux paires de branches de transport parallèles avec des moyens de chauffage disposés respectivement entre les deux branches de chaque paire, les quatre branches de transport étant raccordées en série les unes aux autres par des tronçons de transport en boucle situés en dehors des zones d'action des moyens de chauffage. Pour constituer un four compact, il est avantageux que les quatre branches de transport soient mutuellement parallèles et de préférence que les branches soient sensiblement rectilignes.

D'une façon en soi connue, on peut de préférence associer aux moyens de chauffage des réflecteurs qui sont disposés du côté de chaque branche de transport opposé à celui occupé par les moyens de chauffage.

L'invention sera mieux comprise à la lecture de la description détaillée qui suit de certains modes de réalisation donnés à titre d'exemples nullement limitatifs. Dans cette description on se réfère aux dessins annexés sur lesquels :
- la figure 1 est un schéma simplifié illustrant un agencement de four mettant en oeuvre les dispositions de l'invention, et
- la figure 2 est un schéma simplifié illustrant un exemple avantageux de réalisation de four exploitant les dispositions de la figure 1.

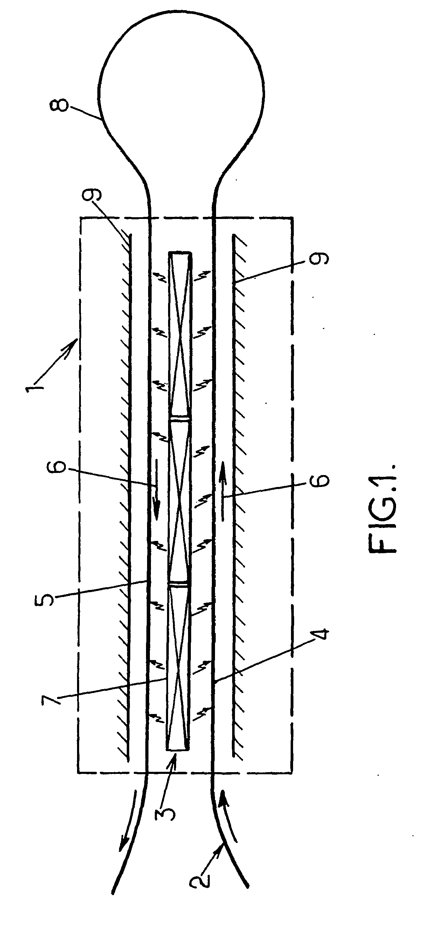

En se reportant tout d'abord à la figure 1, un four 1 est destiné à chauffer au défilé des ébauches, notamment des préformes ou des récipients intermédiaires, en matériau thermoplastique tel que le PET ou le PEN, un tel four pouvant être notamment disposé en amont d'une installation de soufflage ou d'étirage-soufflage pour la fabrication de récipients.

Le four 1 comprend des moyens transporteurs 2 propres à supporter et à déplacer des ébauches (non représentées) les unes à la suite des autres tout en faisant tourner chacune d'elles autour de son propre axe. D'une façon en soi connue, ces moyens transporteurs peuvent consister en une suite articulée ou chaîne de dispositifs de support ("tournettes") propres à supporter les ébauches par leur col, en même temps que ces dispositifs de support sont mis en rotation (par exemple par engrènement d'une roue dentée - qui en est solidaire - avec une chaîne ou crémaillère latérale fixe) de manière telle que chaque ébauche, en même temps qu'elle est déplacée, est mise en rotation pour que son corps soit exposé sur toute sa périphérie à des moyens de chauffage 3 disposés latéralement aux moyens transporteurs.

Conformément à l'invention, les moyens transporteurs 2 sont agencés de manière qu'au moins deux branches 4, 5 de transport s'étendent sensiblement parallèlement l'une à l'autre et à proximité l'une de l'autre, en ayant des sens de déplacement inverses. Les deux branches 4, 5 sont parcourues l'une à la suite de l'autre (en série) par les ébauches comme symbolisé par les flèches 6.

Les moyens de chauffage 3 sont disposés entre les deux branches 4, 5 des moyens de transport 2 et sont agencés de manière à fonctionner bilatéralement et à chauffer simultanément les ébauches circulant en sens inverses respectivement sur les deux branches 4, 5 des moyens de transport.

A titre d'exemple, on a représenté, à la figure 1, les moyens de chauffage 3, ici sous forme de trois ensembles 7 successifs de lampes de chauffage à rayonnement infrarouge.

D'une façon simple, les deux branches 4, 5 des moyens de transport, qui dans un mode de réalisation préféré sont sensiblement rectilignes à l'intérieur du four comme illustré à la figure 1, sont réunies l'une à l'autre, à une extrémité (celle de droite sur la figure 1) du four 1, par un tronçon 8 des moyens de transport conformé en boucle.

Le tronçon 8 en boucle des moyens de transport, outre sa fonction de liaison entre les branches 4, 5 traversant le four, joue également le rôle de zone de stabilisation permettant à la chaleur de continuer à se propager à l'intérieur du matériau thermoplastique et d'éviter un chauffage excessif de la face externe du corps des ébauches.

D'une façon en soi connue, le four 1 est équipé de réflecteurs 9 disposés en regard des moyens de chauffage 3, de l'autre côté des branches 4, 5 des moyens de transport.

Dans un four agencé conformément à l'invention, chaque ébauche passe deux fois de suite en regard des moyens de chauffage avec une période intermédiaire de stabilisation thermique. Pour un four de longueur donnée, on obtient la même durée de chauffage de chaque préforme avec une réduction importante de la puissance des moyens de chauffage et donc de la puissance électrique consommée, sans augmentation du nombre des lampes de chauffage et sans augmentation de la longueur utile au four - par rapport à un four traditionnel à une seule file de transport -, alors que les préformes sont chauffées de manière plus homogène et à coeur.

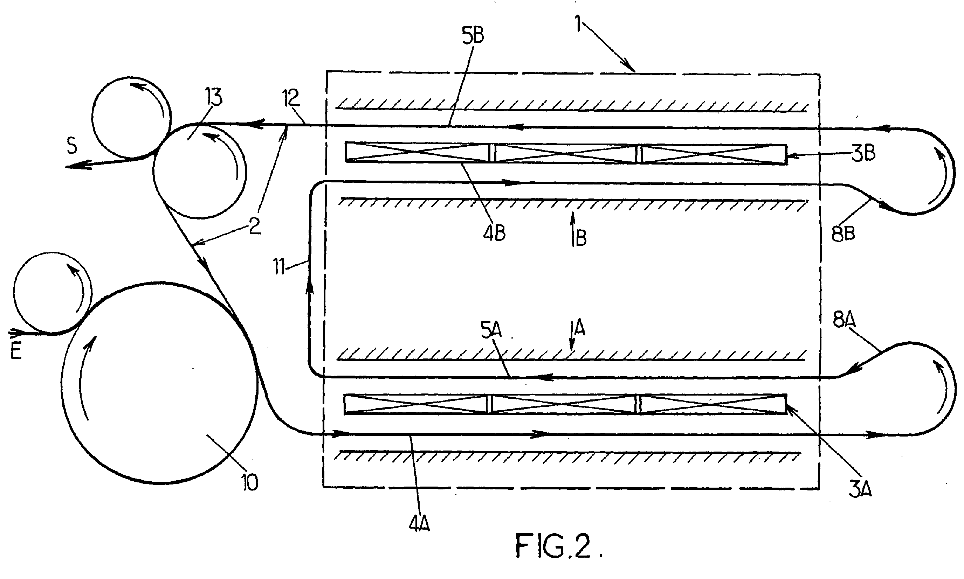

A la figure 2 est illustrée de façon schématique un exemple concret de four mettant en oeuvre les dispositions qui précèdent. En pratique l'agencement illustré à la figure 1 consiste à doubler (parties A et B) la disposition représentée à la figure 1, les ébauches effectuant alors quatre traversées successives du four - et donc quatre chauffages successifs - entrecoupées de périodes de stabilisation thermique.

Les ébauches arrivant en E sont délivrées par des moyens de chargement 10 (tels qu'une roue de vêtissage) aux moyens de transport 2 constitués sous forme d'une chaîne 2, en boucle fermée, de dispositifs de support. La chaîne 2 pénètre alors dans la partie A du four 1 par sa branche 4A où les ébauches subissent un premier chauffage, puis, après passage sur le tronçon 8A en boucle, un second chauffage sur la branche 5A.

Les ébauches passent alors sur un tronçon 11 de raccordement, qui définit également une zone de stabilisation thermique, les amenant à la seconde partie B du four dans laquelle elles suivent un parcours analogue : branche 4B avec chauffage, tronçon 8B en boucle avec stabilisation thermique, branche 5B avec chauffage.

A la sortie de la branche 5B, un tronçon 12 amène les ébauches à des moyens de déchargement 13 (tels qu'une roue de "dévêtissage") où elles sont détachées des dispositifs de support de la chaîne 2 (laquelle retourne vers les moyens de chargement 10) et sont évacuées en S vers, par exemple, une unité de soufflage ou étirage-soufflage. Du fait que les moyens de déchargement 13 ne sont pas accolés immédiatement à la sortie du four, le tronçon 12 constitue, lui aussi, une zone de stabilisation thermique achevant la diffusion de la chaleur au sein du matériau thermoplastique.

Les quatre branches 4A, 5A, 4B, 5B peuvent être mutuellement parallèles, de sorte qu'il est possible de constituer un four d'agencement simple et compact, avec une moindre déperdition de chaleur. En outre, on peut disposer en partie centrale, entre les susdites parties A et B du four, des organes communs au fonctionnement de ces deux parties A et B, et notamment une soufflerie délivrant le gaz de refroidissement superficiel des ébauches.

## Revendications

1. Four (1) pour chauffer au défilé des ébauches, notamment des préformes ou des récipients intermédiaires, en matériau thermoplastique, ce four comprenant des moyens transporteurs (2) propres à supporter et à déplacer des ébauches les unes à la suite des autres tout en faisant tourner chacune d'elles autour de son propre axe et des moyens de chauffage (3) disposés latéralement aux moyens transporteurs (2) de manière à chauffer les corps desdites ébauches en déplacement, les moyens transporteurs (2) étant agencés de manière à présenter au moins deux branches de transport (4, 5) s'étendant sensiblement parallèlement l'une à l'autre et à sens inverses de transport, lesdites deux branches étant parcourues l'une à la suite de l'autre par les ébauches, les moyens de chauffage (3) étant disposés entre lesdites deux branches de transport (4, 5) parallèles qui s'étendent à proximité l'une de l'autre, **caractérisé en ce que** les moyens de chauffage (3) comprennent un seul ensemble de lampes de chauffage à rayonnement infrarouge qui sont disposées entre lesdites deux branches de transport, ce grâce à quoi ces lampes chauffent bilatéralement et simultanément les ébauches défilant en sens inverses respectivement sur les deux branches de transport.

2. Four selon la revendication 1, **caractérisé en ce que** les deux branches de transport (4, 5) sont, à une de leurs extrémités, réunies par un tronçon de transport (8) en boucle qui est situé en dehors de la zone d'action des lampes de chauffage.

3. Four selon la revendication 1 ou 2, **caractérisé en ce qu'**il comporte deux paires de branches de transport parallèles (4A, 5A ; 4B, 5B) avec des lampes de chauffage (3A ; 3B) disposées respectivement entre les deux branches de chaque paire, les quatre branches de transport étant raccordées les unes aux autres par des tronçons de transport (8A ; 8B) en boucle situés en dehors des zones d'action des lampes de chauffage.

4. Four selon la revendication 3, **caractérisé en ce que** les quatre branches de transport (4A, 5A ; 4B, 5B) sont mutuellement parallèles.

5. Four selon l'une quelconque des revendications 1 à 4, **caractérisé en ce que** les branches de transport (4, 5) sont sensiblement rectilignes.

6. Four selon l'une quelconque des revendications 1 à 5, **caractérisé en ce que** des réflecteurs (9) sont disposés du côté de chaque branche de transport opposé à celui occupé par les lampes de chauffage (3).

## Claims

1. Oven (1) for heating running blanks, in particular preforms or intermediate containers, made from thermoplastic material, which oven has conveyor means (2) designed to support and displace the blanks one after the other whilst rotating each one of them about its own axis and heating means (3) disposed laterally with respect to the conveyor means (2) in order to heat the bodies of said blanks as they are displaced, the conveyor means (2) being arranged with at least two conveyor branches (4, 5) extending substantially parallel with one another and with opposite conveying directions, the blanks being circulated through said two branches one after the other, the heating means (3) being disposed between said both parallel conveyor branches (4, 5) which extend close to one another, **characterised in that** the heating means (3) comprise a single set of infrared heat lamps disposed between said both conveyor branches, whereby these lamps heat bilaterally and simultaneously the blanks running in opposite directions respectively on both conveyor branches.

2. Oven as claimed in claim 1, **characterised in that** the two conveyor branches (4, 5) are joined at one of their ends by a loop-shaped conveyor section (8) which is disposed outside the zone in which the heat lamps act.

3. Oven as claimed in claim 1 or 2, **characterised in that** it has two pairs of parallel conveyor branches (4A, 5A; 4B; 5B) with heat lamps (3A; 3B) being disposed respectively between the two branches of each pair, the four conveyor branches being joined to one another by loop-shaped conveyor sections (8A; 8B) disposed outside the zone in which the heat lamps act.

4. Oven as claimed in claim 3, **characterised in that** the four conveyor branches (4A, 5A; 4B, 5B) are mutually parallel.

5. Oven as claimed in any one of claims 1 to 4, **characterised in that** the conveyor branches (4, 5) are substantially rectilinear.

6. Oven as claimed in any one of claims 1 to 5, **characterised in that** reflectors (9) are disposed on the side of each conveyor branch opposite that occupied by the heat lamps (3).

## Patentansprüche

1. Ofen (1) zum Erwärmen von Rohlingen, insbesondere Vorformen oder Zwischenbehältern, aus thermoplastischem Material im Vorbeilauf, wobei dieser Ofen Transportmittel (2), die geeignet sind, um Rohlinge nacheinander zu tragen und zu verschieben und gleichzeitig jeden von ihnen um seine eigene Achse zu drehen, und Heizmittel (3)- aufweist, die seitlich zu den Transportmitteln (2) angeordnet sind, um die Körper der in Bewegung befindlichen Rohlinge zu erwärmen, wobei die Transportmittel (2) eingerichtet sind, um mindestens zwei Transportzweige (4, 5) aufzuweisen, die sich im Wesentlichen parallel zueinander und in umgekehrten Transportrichtungen erstrecken, wobei die zwei Zweige nacheinander von den Rohlingen durchlaufen werden, wobei die Heizmittel (3) zwischen den zwei parallelen Transportzweigen (4, 5) angeordnet sind, die sich nahe beieinander erstrecken, **dadurch gekennzeichnet, dass** die Heizmittel (3) eine einzige Gruppe von Heizlampen mit Infrarotstrahlung aufweisen, die zwischen den zwei Transportzweigen angeordnet sind, wodurch diese Lampen zweiseitig und gleichzeitig die Rohlinge erwärmen, die in Gegenrichtungen auf den zwei Transportzweigen vorbeilaufen.

2. Ofen nach Anspruch 1, **dadurch gekennzeichnet, dass** die zwei Transportzweige (4, 5) an einem ihrer Enden durch einen schleifenförmigen Transportabschnitt (8) miteinander verbunden sind, der sich außerhalb der Wirkungszone der Heizlampen befindet.

3. Ofen nach Anspruch 1 oder 2, **dadurch gekennzeichnet, dass** er zwei Paare von parallelen Transportzweigen (4A, 5A; 4B, 5B) mit Heizlampen (3A; 3B) aufweist, die je zwischen den zwei Zweigen jedes Paars angeordnet sind, wobei die vier Transportzweige durch schleifenförmige Transportabschnitte (8A; 8B) aneinander angeschlossen sind, die sich außerhalb der Wirkungszonen der Heizlampen befinden.

4. Ofen nach Anspruch 3, **dadurch gekennzeichnet, dass** die vier Transportzweige (4A, 5A; 4B, 5B) zueinander parallel sind.

5. Ofen nach einem der Ansprüche 1 bis 4, **dadurch gekennzeichnet, dass** die Transportzweige (4, 5) im Wesentlichen geradlinig sind.

6. Ofen nach einem der Ansprüche 1 bis 5, **dadurch gekennzeichnet, dass** Reflektoren (9) auf der Seite jedes Transportzweigs entgegengesetzt zu derjenigen angeordnet sind, die von den Heizlampen (3) besetzt ist.
